# EUROPÄISCHE PATENTANMELDUNG

(11) **EP 0 900 978 A1**
(43) Veröffentlichungstag der Anmeldung: **10.03.1999**
(21) Anmeldenummer: 98116604.4
(22) Anmeldetag: 02.09.1998
(51) Int. Cl.: F21V 8/00

(54) **Reflektorleuchte**

(30) Priorität: 06.09.1997 DE 19739023
(71) Anmelder: Hella KG Hueck & Co., 59552 Lippstadt (DE)
(72) Erfinder: Giepen, Bernd, 59597 Erwitte (DE); Merkelbach, Frank Dr., 59597 Erwitte (DE); Korff, Detlef, 59557 Lippstadt (DE)

(57) **Zusammenfassung**

Reflektorleuchte, bestehend aus einem Reflektor (1) mit Lampe (2) und einem den Reflektor (1) mit einem Ende eines Lichtleiters (5) verbindenden Koppelelement (4), das mit dem Reflektor (1) über eine Renkverbindung (6) verbunden ist, wobei der Reflektor (1) an seinem dem Koppelelement (4) zugewandten Ende einen Flansch (7) aufweist, der auf seiner dem Reflektor (1) abgewandten Stirnfläche (8) einen innenliegenden Kragen (9) aufweist und auf seiner außenliegenden Mantelfläche (10) mindestens zwei vom Koppelelement (4) weggerichtete Rastnasen (12) aufweist, die von Rastarmen (20) hintergreifbar sind, die als Teil einer den Flansch (7) übergreifenden ringförmigen Wandung des Koppelelementes (4) ausgebildet sind.

## Beschreibung

Die Erfindung betrifft eine Reflektorleuchte, bestehend aus einem Reflektor mit Lampe und einem den Reflektor mit einem Ende eines Lichtleiters verbindenden Koppelelement, das mit dem Reflektor über eine Renkverbindung verbunden ist.

Aus der DE 1 597 911 ist eine Reflektorleuchte bekannt, bei der ein Reflektor über ein Koppelelement mit den Enden von Lichtleitern verbindbar ist. Der Reflektor weist in Abstrahlrichtung an seinem stirnseitigen Ende einen Flansch auf, der mit einem Flansch des Koppelelementes über eine Renkverbindung bzw. eine sogenannte Bajonettverbindung verbunden ist. An dem Flansch des Koppelelementes sind auf der dem Flansch des Reflektors zugewandten Stirnseite kopfförmige Ansätze angeordnet, die in Bajonettöffnungen der benachbarten Stirnseite des Flansches des Reflektors einsteckbar und durch Verdrehen verriegelbar sind.

Nachteilig dabei ist, daß sich durch Erschütterungen die Renk- bzw. Bajonettverbindung entriegeln kann. Weiterhin nachteilig dabei ist, daß die Flanschverbindung praktisch luftundurchlässig ist und das Koppelelement daher seitlich geöffnet sein muß, was zu einer leichten Verschmutzung einerseits und zum Austreten von unerwünschtem Streulicht andererseits führt.

Aufgabe der vorliegenden Erfindung ist es daher, zwischen Reflektor und Koppelelement eine Verbindung zu schaffen, die einfach, sicher und lichtdicht, aber luftdurchlässig ist.

Die Aufgabe wird erfindungsgemäß dadurch gelöst, daß der Reflektor an seinem dem Koppelelement zugewandten Ende einen Flansch aufweist, der auf seiner dem Reflektor abgewandten Stirnfläche einen innenliegenden Kragen aufweist und auf seiner außenliegenden Mantelfläche mindestens zwei vom Koppelelement weggerichtete Rastnasen aufweist, die von Rastarmen hintergreifbar sind, die als Teil einer den Flansch übergreifenden ringförmigen Wandung des Koppelelementes ausgebildet sind.

Durch den Kragen auf der dem Reflektor abgewandten Stirnfläche des Flansches wird zuverlässig verhindert, daß aus der Renkverbindung zwischen Reflektor und Koppelelement seitlich Licht austreten kann. Zugleich ist es möglich, die Renkverbindung so zu gestalten, daß sie luftdurchlässig ist. Durch die den Flansch übergreifende ringförmige Wandung des Koppelelementes wird eine gute Zentrierung zwischen Koppelelement und Reflektor erreicht und die Lichtdichtheit erhöht. Durch die die Rastnasen des Reflektors hintergreifenden Rastarme wird eine sichere Verbindung erzielt.

Nach einer bevorzugten Ausführungsform der Erfindung weist der Reflektor auf seiner Mantelfläche drei etwa im gleichen Abstand zueinander angeordnete Rastnasen auf, die von entsprechenden federnden Rastarmen des Koppelelementes hintergreifbar sind. Durch die federnden Rastarme ist eine sichere kraftschlüssige Verbindung zwischen Reflektor und Koppelelement möglich.

Gemäß einer weiteren bevorzugten Ausführungsform der Erfindung sind die Rastnasen zu ihrem freien Ende hin in einer konzentrisch, quer von der Längsachse ausgerichteten Ebene konvex, d. h., dachförmig mit zu einem Scheitelpunkt hin verlaufenden Anlaufschrägen ausgebildet. In einer Raststellung weisen die Rastarme an ihrer den Rastnasen zugewandten Unterseite ein auf die Rastnasen abgestimmtes Gegenprofil auf. Dadurch ist eine kraft- und formschlüssige sichere Renkverbindung herstellbar.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

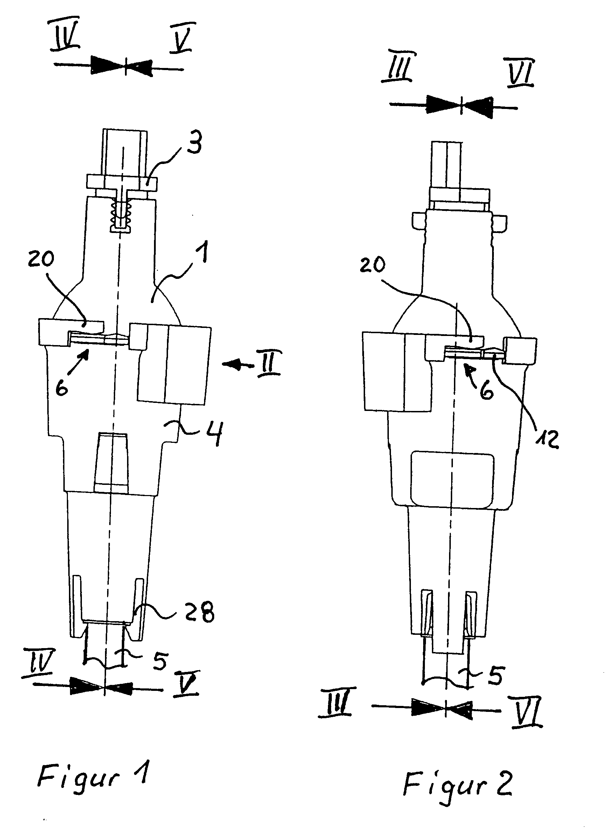

- Figur 1:: Eine Seitenansicht einer Reflektorleuchte mit Reflektor und Koppelelement in nicht verriegelter Stellung,
- Figur 2:: die Reflektorleuchte von Figur 1 aus Richtung II gesehen,

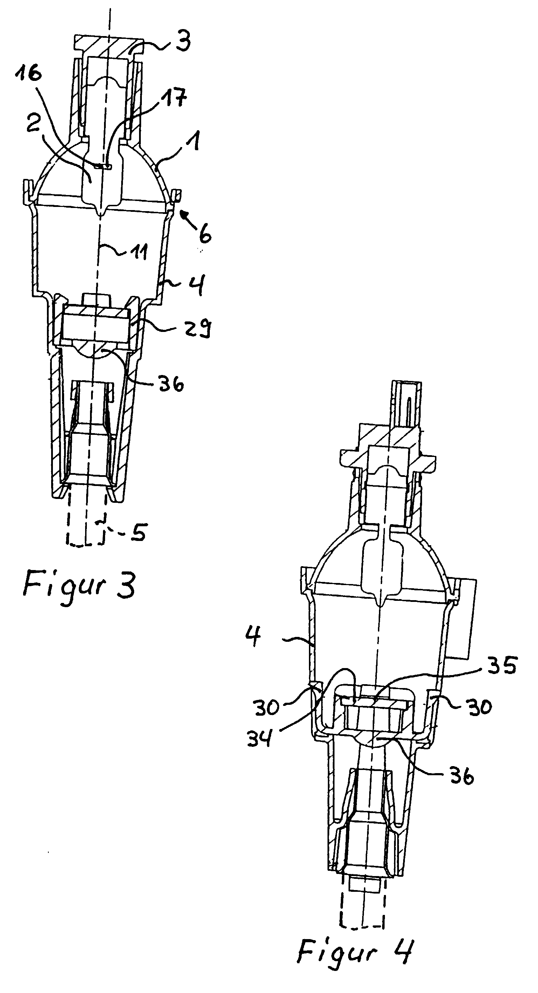

- Figur 3:: die Reflektorleuchte von Figur 2 entlang der Linie III - III geschnitten,

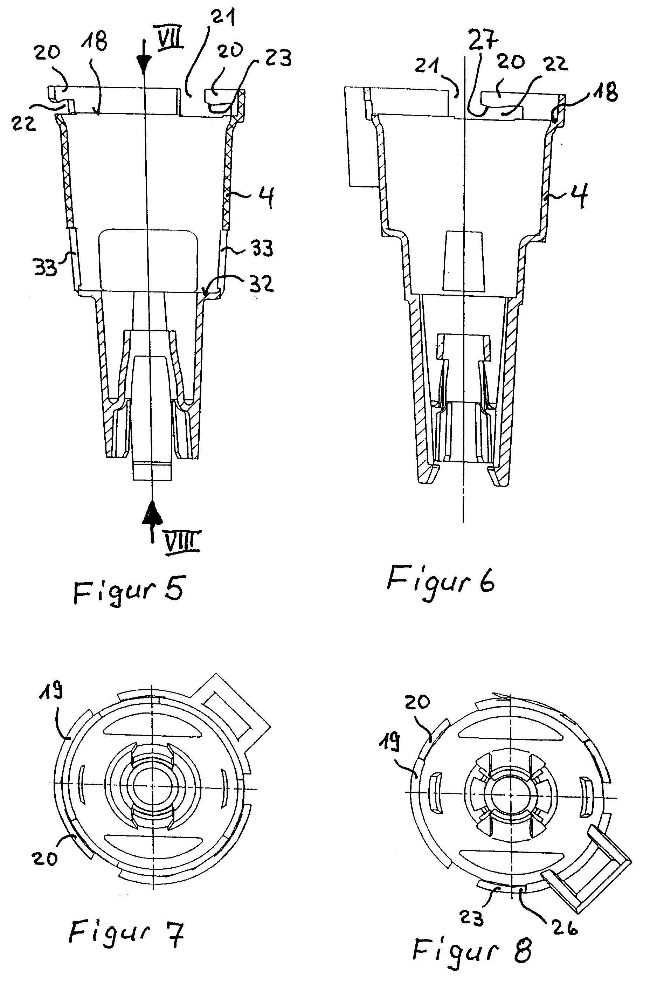

- Figur 4:: die Reflektorleuchte von Figur 1 entlang der Linie IV - IV geschnitten,
- Figur 5:: das Koppelelement von Figur 1 entlang der Linie V - V geschnitten,
- Figur 6:: das Koppelelement von Figur 2 entlang der Linie VI - VI geschnitten,
- Figur 7:: eine Draufsicht auf das Koppelelement von Figur 5 aus Richtung VII,
- Figur 8:: eine Untersicht unter das Koppelelement von Figur 5 aus Richtung VIII,

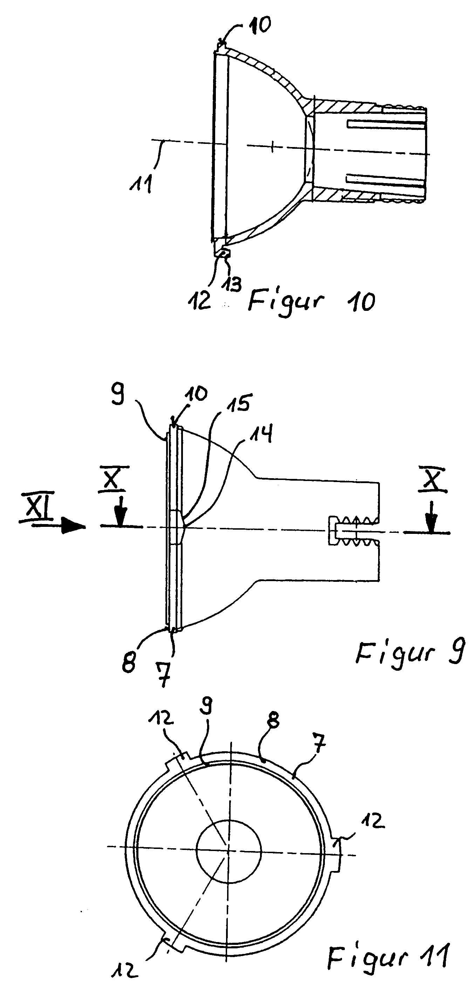

- Figur 9:: eine Seitenansicht des Reflektors von Figur 1,
- Figur 10:: den Reflektor von Figur 9 entlang der Linie X - X geschnitten und
- Figur 11:: eine Vorderansicht des Reflektors von Figur 9 aus Richtung XI.

Eine Reflektorleuchte besteht im wesentlichen aus einem Reflektor (1) mit einer Lampe (2) und einer Lampenfassung (3), einem Koppelelement (4) und einem Lichtleiter (5). Der Reflektor (1) ist mit dem Koppelelement (4) über eine Renkverbindung (6) verbunden.

Der Reflektor (1) weist an seinem dem Koppelelement (4) zugewandten Ende einen Flansch (7) auf. In Abstrahlrichtung weist der Flansch (7) auf seiner dem Koppelelement (4) zugewandten Stirnfläche (8) einen innenliegenden Kragen (9) auf. Auf seiner außenliegenden Mantelfläche (10) die konzentrisch zu einer Längsachse (11) angeordnet ist, weist der Flansch (7) drei vom Koppelelement (4) weggerichtete und etwa parallel zur Längsachse (11) verlaufende Rastnasen (12) auf. An ihren der Stirnfläche (8) abgewandten freien Enden (13) sind die Rastnasen (12) konvex, etwa konzentrisch zu der Längsachse (11) in einer quer zu ihr ausgerichteten Ebene ausgebildet. Die konvexe Form wird nach dem Ausführungsbeispiel von zwei zu einer Scheitellinie (14) hin ansteigenden Anlaufschrägen gebildet. Der Reflektor (1) ist als Ellipsoidreflektor ausgebildet, in dessem ersten Brennpunkt (16) sich die Glühwendel (17) der Lampe (2) befindet.

Das Koppelelement (4) weist an seinem dem Reflektor (1) zugewandten Ende einen innenliegenden Ansatz (18) auf, gegen den die Stirnfläche (8) des Reflektors (1) anschlägt. Eine den Ansatz (18) zum Reflektor (1) hin umgebende ringförmige Wandung (19) ist so ausgebildet, daß sie bei eingesetztem Reflektor (1), dessen Flansch (7) an seiner Mantelfläche (10) übergreift. Als Teil der ringförmigen Wandung (19) sind drei Rastarme (20) ausgebildet. Die Rastarme (20) werden an ihren freien Enden jeweils von einer Nut (21) begrenzt, in die die entsprechende Rastnase (12) des Reflektors (1) einsetzbar ist. Die Nut (21) geht in eine quer zur Längsachse (11) verlaufende Quernut (22) über, die den Rastarm (20) an seiner der Stirnfläche (8) des Reflektors (1) abgewandten Unterseite (23) begrenzt. An seinem dem freien Ende (24) abgewandten Ende (25) ist der Rastarm (20) an seiner Unterseite (23) mit einem auf die Rastnase (12) abgestimmten Gegenprofil (26) versehen. An seinem freien Ende (24) weist der Rastarm (20) an der Unterseite (23) eine Anlaufschräge (27) auf. Der Reflektor (1) ist mit seinem Flansch (7) so in die ringförmige Wandung (19) des Koppelelementes (4) einsetzbar, das seine Stirnfläche (8) gegen den Ansatz (18) des Koppelelementes (4) anschlägt. Der Kragen (9) verhindert dabei, daß Licht seitlich aus der Renkverbindung (6) austritt und Störlicht vagabundieren kann. Der Kragen (9) weist aber zu dem Koppelelement (4) einen solchen Abstand auf, daß die Renkverbindung (6) luftdurchlässig ist. Die Rastnase (12) gleitet dabei in die ihr benachbarte Nut (21) und durch Verdrehen des Reflektors (1) gegenüber dem Koppelelement (4) in die Quernut (22). Beim Verdrehen des Reflektors gleitet die der Anlaufschräge (27) des Rastarmes (20) benachbarte Anlaufschräge (15) der Rastnase (12) über die Anlaufschräge (27), so daß der Rastarm (20) in Richtung Reflektor (1) federt und nach Erreichen der Raststellung die Rastnase (12) mit ihrem freien Ende (13) in das Gegenprofil (26) greift und der Rastarm (20) wieder zurückfedert, so daß eine kraft- und formschlüssige Renkverbindung entsteht.

An dem dem Reflektor (1) abgewandten Ende des Koppelelementes (4) ist der Lichtleiter (5) mit seinem dem Reflektor (1) zugewandten Ende in eine Rastaufnahme (28) selbstrastend einsteckbar. Zwischen Reflektor (1) und Lichtleiter (5) bzw. der Rastaufnahme (28) ist ein Optikgehäuse (29) über zwei einander gegenüberliegende seitliche Rastteile (30) selbstrastend in das Koppelelement (4) eingesetzt. Dabei sitzt das Optikgehäuse (29) mit einer dem Lichtleiter (5) zugewandten Stirnfläche (31) auf einen innenliegenden Ansatz (32) des Koppelelementes (4) auf, wobei die seitlichen Rastteile (30) rastend in ihnen benachbarte seitliche Rastöffnungen (33) des Koppelelementes eingreifen. Das Optikgehäuse weist zum Reflektor (1) hin einen Reflektionsfilter (34) auf, der im zweiten Brennpunkt (35) des Reflektors (1) angeordnet ist. Auf der dem Lichtleiter (5) zugewandten Seite des Optikgehäuses (29) ist eine lichtverteilende Linse (36) angeordnet, die in die seitlichen Rastteile (30) übergeht. Linse (36) und Optikgehäuse (29) sind aus PC (Makrolon) gefertigt. Reflektor (1) und Koppelelement (4) sind beispielsweise aus Polyetherimid (PEI), das eine herausragende Warmformbeständigkeit bei leichter Metallisierbarkeit aufweist, gefertigt.

## Patentansprüche

1. Reflektorleuchte, bestehend aus einem Reflektor mit Lampe und einem den Reflektor mit einem Ende eines Lichtleiters verbindenden Koppelelement, das mit dem Reflektor über eine Renkverbindung verbunden ist, dadurch gekennzeichnet, daß der Reflektor (1) an seinem dem Koppelelement (4) zugewandten Ende einen Flansch (7) aufweist, der auf seiner dem Reflektor (1) abgewandten Stirnfläche (8) einen innenliegenden Kragen (9) aufweist und auf seiner außenliegenden Mantelfläche (10) mindestens zwei vom Koppelelement (4) weggerichtete Rastnasen (12) aufweist, die von Rastarmen (20) hintergreifbar sind, die als Teil einer den Flansch (7) übergreifenden ringförmigen Wandung (19) des Koppelelementes (4) ausgebildet sind.

2. Reflektorleuchte nach Anspruch 1, dadurch gekennzeichnet, daß der Flansch (7) des Reflektors (1) auf seiner Mantelfläche (10) drei etwa im gleichen Anstand zueinander angeordnete Rastnasen (12) aufweist.

3. Reflektorleuchte nach Anspruch 1 oder 2, dadurch gekennzeichnet, daß die Rastarme (20) federnd ausgebildet sind.

4. Reflektorleuchte nach einem der Ansprüche 1 bis 3, dadurch gekennzeichnet, daß die Rastnasen (12) zu ihrem freien Ende (13) hin in einer konzentrisch zu einer Längsachse (11) in einer quer zu ihr ausgerichteten Ebene konvex ausgebildet sind und die Rastarme (20) in einer Raststellung auf ihrer den Rastnasen (12) zugewandten Unterseite (23) ein auf die Rastnasen (12) abgestimmtes Gegenprofil (26) aufweisen.

5. Reflektorleuchte nach Anspruch 4, dadurch gekennzeichnet, daß die Rastnasen (12) an ihrem freien Ende (13) dachförmig zu einer Scheitellinie (14) hin verlaufende Anlaufschrägen (15) aufweisen.

6. Reflektorleuchte nach einem der Ansprüche 1 bis 5, dadurch gekennzeichnet, daß die Renkverbindung (6) lichtdicht ausgebildet ist.

7. Reflektorleuchte nach einem der Ansprüche 1 bis 6, dadurch gekennzeichnet, daß die Renkverbindung (6) luftdurchlässig ausgebildet ist.

8. Reflektorleuchte nach einem der Ansprüche 1 bis 7, dadurch gekennzeichnet, daß der Reflektor (1) aus Polyetherimid ausgebildet ist.

9. Reflektorleuchte nach einem der Ansprüche 1 bis 8, dadurch gekennzeichnet, daß das Koppelelement (4) aus Polyetherimid ausgebildet ist.

10. Reflektorleuchte nach einem der Ansprüche 1 bis 9, dadurch gekennzeichnet, daß zwischen Reflektor (1) und Lichtleiter (5) eine Linse (36) mit vorgelagertem Reflektionsfilter (34) angeordnet ist, und daß die Linse (36) in ein den Reflektionsfilter (34) aufnehmendes Optikgehäuse (29) übergeht, das über zwei einander gegenüberliegende federnde seitliche Rastteile (30) mit dem Koppelelement (4) rastend verbindbar ist.
